# FASCICULE DE BREVET EUROPEEN

(11) **EP 1 917 217 B1**
(45) Date de publication et mention de la délivrance du brevet: **27.11.2013**
(21) Numéro de dépôt: 06778855.4
(22) Date de dépôt: 11.07.2006
(51) Int. Cl.: C02F 1/72, C02F 1/30

(54) **PROCEDE DE DEPOLLUTION DE MILIEUX AQUEUX CONTENANT DES POLLUANTS ORGANIQUES**
VERFAHREN ZUR REINIGUNG VON ORGANISCHE SCHADSTOFFE ENTHALTENDEN WÄSSRIGEN MEDIEN
METHOD FOR DEPOLLUTING AQUEOUS MEDIA CONTAINING ORGANIC POLLUTANTS

(30) Priorité: 12.07.2005 FR 0507456
(43) Date de publication de la demande: 07.05.2008
(73) Titulaire: CENTRE NATIONAL DE LA RECHERCHE SCIENTIFIQUE, 75016 Paris (FR); UNIVERSITE DE POITIERS, 86034 Poitiers (FR)
(72) Inventeur: KARPEL VEL LEITNER, Nathalie, F-86210 Vouneuil Sur Vienne (FR); CATASTINI, Carole, F-86000 Poitiers (FR)
(74) Mandataire: Sueur, Yvette
(86) Numéro de dépôt international: PCT/FR2006/001685
(87) Numéro de publication internationale: WO 2007/006968

(56) Documents cités:
- EP-B- 0 824 504
- DE-A1- 3 836 850
- US-A- 5 457 269

## Description

La présente invention concerne un procédé de dépollution de milieux aqueux contenant des polluants organiques.

Il est connu d'utiliser un faisceau d'électrons pour le traitement d'effluents aqueux contenant des polluants organiques. La dégradation des polluants provient de l'action d'espèces réactives formées lorsque les électrons pénètrent dans l'eau, lesdites espèces réactives étant OH°, H°, e⁻_{aq}. Un traitement comprenant uniquement un traitement par faisceau d'électrons permet de diminuer le taux de certains polluants, voire de supprimer totalement ledit polluant, à condition que l'énergie appliquée soit suffisante compte tenu du polluant concerné. Mais cette énergie est insuffisante dans la plupart des cas.

Le principe de base d'un accélérateur générant un faisceau d'électrons est le transfert d'énergie (généralement de 0,5 à 10 MeV) à des particules chargées, sous l'effet d'un champ électrique créé par une tension électrique. Un accélérateur d'électrons comprend donc :
- une source d'électrons (cathode métallique chauffée),
- une ou plusieurs sources de haute tension (suite d'électrodes portées à des potentiels appropriés),
- un tube accélérateur sous vide poussé,
- un système de focalisation puis balayage du faisceau pour émission homogène,
- une fenêtre (mince feuille de titane) assurant l'étanchéité tout en laissant passer les électrons accélérés.

Des améliorations ont été proposées afin d'élargir le procédé de traitement par faisceau d'électrons à des polluants variés, et/ou pour obtenir de meilleurs taux de destruction, les améliorations consistant en général à ajouter des additifs au milieu à traiter, ou à combiner le traitement par faisceau d'électrons avec un autre traitement.

Il a été proposé d'effectuer le traitement par irradiation en présence d'ozone dans le milieu réactionnel, notamment pour le traitement d'eaux naturelles contenant des aromatiques halogénés, d'eaux naturelles contenant des alcanes et des alcènes halogénés, et des eaux potables contenant des alcanes et des alcènes halogénés [Gehringer P., et al., Environmental Applications of ionizing radiation, Ed by Cooper W.J., Curry R.D. and O'Shea K.E., Wiley and Sons Pub., (1988) pp 325-340] ; pour le traitement des eaux de rivières ayant une DCO [Pikaev A.K., et al., Radiation Physics and Chemistry, (1996) 48, 75-80.] ; pour le traitement des eaux usées ayant une DCO [Pikaev, et al, High Energy Chemistry, (2000b) 34, 55-73].

L'addition de O₃/O₂ lors d'un traitement par irradiation a été mise en oeuvre pour le traitement d'eaux synthétiques contenant des aromatiques halogénés ([Getoff, Radiation Physics and Chemistry, (2002) 65, 437-446].

L'addition de charbon actif lors d'un traitement par irradiation à été décrite pour le traitement d'eaux synthétiques contenant des aromatiques halogénés [Dickson, et al., Rapport de Atomic Energy of Canada Ltd., Pinawa MB Canada (1988) AECL 9558, 46p].

L'addition de O₃, H₂O₂, O₂ et N₂O a été mise en oeuvre pour le traitement d'eaux naturelles contenant des alcanes ou des alcènes halogénés [Pikaev A.K., High Energy Chemistry, (2000a) 34, 1-12], [Pikaev A.K., Radiation Physics and Chemistry, (2002) 65, 515-526] et [Gehringer, et al., Radiation Physics and Chemistry, (2002) 65, 379-386] :

L'addition de TiO₂ a été appliquée au traitement d'eaux synthétiques contenant des composés aromatiques [Chitose N., et al., Chemosphere, (2003) 50, 1007-1013].

La combinaison avec un traitement biologique a été mise en oeuvre pour le traitement du Carbone Organique Total (COT) d'eaux usées et d'eaux usées contenant de la DBO (demande biochimique en oxygène) [Han., et al., Radiation Physics and Chemistry, (2002) 64, 53-59].

La combinaison avec une coagulation a été décrite pour le traitement d'effluents industriels contenant une DCO (demande chimique en oxygène) et d'effluents industriels contenant un colorant [Pikaev A.K., High Energy Chemistry, (2000b) 34, 55-73].

La combinaison avec une coagulation, une floculation et un traitement biologique a été décrite pour le traitement d'effluents industriels contenant une DCO et d'effluents industriels contenant un colorant[Shin, et al., Radiation Physics and Chemistry, (2002) 65, 539-547].

Un procédé qui combine une adsorption sur une matière végétale avec une irradiation a été décrit pour le traitement d'eaux de source contenant des métaux [Pikaev, 2000b, précité].

Le document US5457269A1 décrit un procédé de dépollution de courants gazeux et aqueux par un faisceau d'électrons accélérés caractérisé en ce que le traitement est activé par un peracide. Le document DE3836850A1 décrit l'utilisation de persulfate de sodium avec un rayonnement ionisant produit par des rayons UV.

Un procédé dans lequel un sel de Fe(II) est ajouté à l'effluent soumis à une irradiation est décrit pour l'élimination de molécules de colorant organique contenues dans les effluents de teinturerie [C. N. Kurucz, et al. J. Adv. Oxid. Technol., Vol. 3, n° 1, 1998, pp. 116-123].

La plupart de ces procédés de l'art antérieur, qui combinent un traitement par faisceau d'électrons et un traitement additionnel, ont des performances améliorées pour diminuer la teneur en polluant. Cependant, ils présentent quelques inconvénients. Certaines combinaisons impliquent des réactifs coûteux, ou bien leur mise en oeuvre peut être délicate (notamment lorsqu'il y a transfert d'ozone, ou nécessité de récupération des catalyseurs solides). La combinaison avec d'autres procédés de traitement génère un encombrement et souvent un coût important. Enfin, l'amélioration n'est pas toujours suffisante.

Le but de la présente invention est de proposer un procédé simple qui donne des résultats améliorés par rapport à ceux des techniques de l'art antérieur.

Le procédé est destiné au traitement d'effluents industriels, qui contiennent généralement plusieurs types de molécules polluantes, dont la nature et la teneur individuelles ne sont pas connues de manière précise. A défaut de pouvoir être caractérisé par la teneur et la nature des différentes molécules polluantes, un effluent peut être caractérisé de manière utile par la DCO (demande chimique en oxygène) et par le COT (carbone organique total).

Le procédé de la présente invention est un procédé visant à diminuer la DCO et/ou le COT d'un milieu aqueux contenant des molécules organiques, caractérisé en ce qu'il consiste à soumettre ledit milieu aqueux à un faisceau d'électrons généré par un accélérateur d'électrons, en présence d'un catalyseur, puis à éliminer de la solution traitée les précipités formés, ledit catalyseur comprenant un persulfate de métal alcalin, de métal alcalino-terreux ou de métal de transition et un sel de Fe(II) ou un sel de Fe(III).

Les persulfates de métal alcalin sont préférés, en particulier le persulfate de sodium.

Le sel de fer est choisi parmi les sels dans lesquels l'anion ne constitue pas un compétiteur dans les réactions radicalaires, c'est-à-dire le perchlorate de fer et le sulfate de fer.

Le catalyseur est donc constitué par un mélange de sel de fer et de persulfate et il est préférable d'une part d'utiliser une concentration en sel ferrique ou en sel ferreux inférieure à celle du persulfate, et d'autre part de porter le milieu à traiter à pH acide pour éviter la précipitation des hydroxydes de fer qui se forment avant ou pendant le traitement par faisceau d'électrons.

Le procédé proposé est utile pour l'abattement de la DCO d'eaux résiduaires, et pour le traitement de milieux aqueux contenant des molécules organiques du type aromatique et/ou des molécules organiques du type aliphatique. Comme exemples de molécules organiques du type aromatique, on peut citer le phénol et le nitrophénol. Comme exemples de molécules du type aliphatique, on peut citer les acides carboxyliques.

La quantité de catalyseur dépend de la charge organique (évaluée en terme de COT et/ou de DCO). Elle doit en outre être ajustée en fonction de la dose d'irradiation. La détermination des quantités optimales pour chaque cas d'espèces est à la portée de l'homme de métier, par l'exécution d'une série d'essais par approximations successives.

Pour des charges organiques très élevées, il est préférable de soumettre l'effluent à un traitement préliminaire visant à diminuer la charge organique facilement oxydable, en vue de faciliter l'oxydation des molécules organiques les moins oxydables par le procédé proposé. Le traitement préliminaire peut être une irradiation sans catalyseur.

Un traitement par faisceau d'électrons effectué de manière classique en l'absence de catalyseur génère des espèces réactives qui se forment lorsque les électrons pénètrent dans l'eau, lesdites espèces réactives étant OH°, H°, e⁻_{aq}. Les radicaux OH° et les électrons solvatés peuvent induire des réactions respectivement d'oxydation et de réduction, ce qui permet d'agir sur une large gamme de composés.

Le traitement par faisceau d'électrons est effectué en présence de persulfate et il se forme des radicaux sulfates qui sont capables d'oxyder des composés sur lesquels les espèces réactives OH°, H°, e⁻_{aq} ont peu d'effet. L'utilisation de persulfate permet par conséquent d'augmenter la performance du procédé de traitement par faisceau ionique, en ce sens qu'il permet de détruire une plus grande variété de composés organiques polluants, et/ou qu'il diminue le taux de polluant résiduel avec un taux d'irradiation moindre. L'addition d'un sel de fer améliore les performances.

La présente invention est décrite plus en détail à l'aide des exemples suivants, qui ne sont destinés qu'à illustrer l'invention mais auxquels la portée de l'invention n'est pas limitée.

### Exemple 1

Divers essais ont été effectués sur une solution aqueuse de phénol (100 µM de phénol/L), qui a un pH de 3.

La solution a été soumise à différentes doses d'irradiation en faisant varier le temps de séjour sous le faisceau d'électrons, et on a modifié la nature du catalyseur et/ou la teneur en catalyseur. Chaque échantillon a ensuite été analysé par HPLC afin de déterminer la variation de concentration du polluant.

Les essais notés 1c et 2c sont des essais comparatifs dans lesquels la solution de phénol ne contient pas de catalyseur (1c) ou contient un catalyseur TiO₂ (2c) ou persulfate (3, 5, 6).

Pour les essais selon l'invention (4, 5a, 6a à 9), la solution de phénol contient en outre le catalyseur selon l'invention

Les figures 1 à 3 représentent l'évolution du taux de phénol en solution aqueuse (en ordonnée, en µM), en fonction de la dose d'irradiation (Gy en abscisse).
La figure 1 concerne la solution aqueuse sans catalyseur de l'exemple comparatif 1c.
La figure 2 concerne la solution aqueuse avec catalyseur (sel de Fe(III) et persulfate) de l'ex. 4.
La figure 3 concerne le traitement des solutions aqueuses des exemples 5 (courbe matérialisée par des carrés), 5a (courbe matérialisée par des losanges) et 5b (courbe matérialisée par des triangles). La teneur résiduelle en phénol (P en µM) est indiquée en ordonnée, la dose d'irradiation en Gy est indiquée en abscisse.

L'ensemble des résultats est donné dans le tableau suivant I.

**Tableau I**

| Ex. | sel de fer II ou III sulfate (s) ou perchlorate (p) | persulfate de Na | Taux résiduel de molécule organique | Dose d'irradiation (Gy) |
|---|---|---|---|---|
| 1c | - | - | 15% | 900 |
| | | | 46% | 320 |
| 2c | | | 7,2% | 900 |
| | | | 27,5% | 300 |
| 3 | - | 3000 µM | 5% | 900 |
| | | | 21% | 300 |
| 4 | Fe(III) 200 µM (s) | 3000 µM | 0% | 300 |
| | | | 26% | 150 |
| 5 | | 1000 µM | 30% | 300 |
| | | | 48% | 150 |
| 5a | Fe(III) 200 µM (p) | 1000 µM | 0% | 300 |
| | | | 24% | 150 |
| 6 | | 500 µM | 34% | 300 |
| | | | 56% | 150 |
| 6a | Fe(III) 300 µM (p) | 500 µM | 5% | 300 |
| | | | 30% | 150 |
| 6b | Fe(III) 200 µM (s) | 500 µM | 16% | 300 |
| | | | 35% | 150 |
| 6c | Fe(III) 100 µM (p) | 500 µM | 8% | 300 |
| | | | 30% | 150 |
| 6d | Fe(II) 200 µM (p) | 500 µM | 30% | 150 |
| 7 | Fe(II) 200 µM (p) | 300 µM | 45% | 150 |
| 8 | Fe(III) 200 µM (p) | 200 µM | 27% | 300 |
| | | | 44% | 150 |
| 8a | Fe(II) 200 µM (p) | 200 µM | 50% | 150 |
| 9 | Fe(III) 200 µM (p) | 100 µM | 39% | 300 |
| | | | 56% | 150 |

La comparaison des performances obtenues par les exemples comparatifs et celles obtenues par les exemples selon l'invention montrent une amélioration dans tous les cas. En présence de catalyseur, le taux résiduel diminue pour une dose d'irradiation analogue, et un taux résiduel donné peut être obtenu avec une dose d'irradiation plus faible.

La comparaison des essais 3 et 4 montre que l'addition de sulfate de fer selon l'invention à un milieu contenant du persulfate de Na permet de diminuer substantiellement le taux d'irradiation pour obtenir un résultat analogue, voire meilleur.

La comparaison des exemples 4, 5a, 6b, 8 et 9 montre que, en présence de 200 µM de sel de Fe(III), une teneur de 1000 µM est une limite supérieure au-delà de laquelle les performances ne sont plus améliorées, pour un effluent contenant 100 µM de phénol.

Il apparaît ainsi que, pour un catalyseur donné, il existe un domaine de concentration de catalyseur dans lequel les performances sont optimales, limité par une valeur supérieure qu'il est inutile de dépasser. La détermination de ce domaine est à la portée de l'homme de métier, auquel il suffit de réaliser quelques essais préliminaires en modifiant les conditions, pour un effluent à traiter donné.

### Exemple 2

Des essais ont été effectués sur une solution aqueuse de nitrophénol (100 µM/L), dans les conditions décrites dans l'exemple 1.

La solution a été soumise à différentes doses d'irradiation en faisant varier le temps de séjour sous le faisceau d'électrons, et on a modifié la nature du catalyseur et/ou la teneur en catalyseur. Chaque échantillon a ensuite été analysé par HPLC afin de déterminer la variation de concentration du polluant.

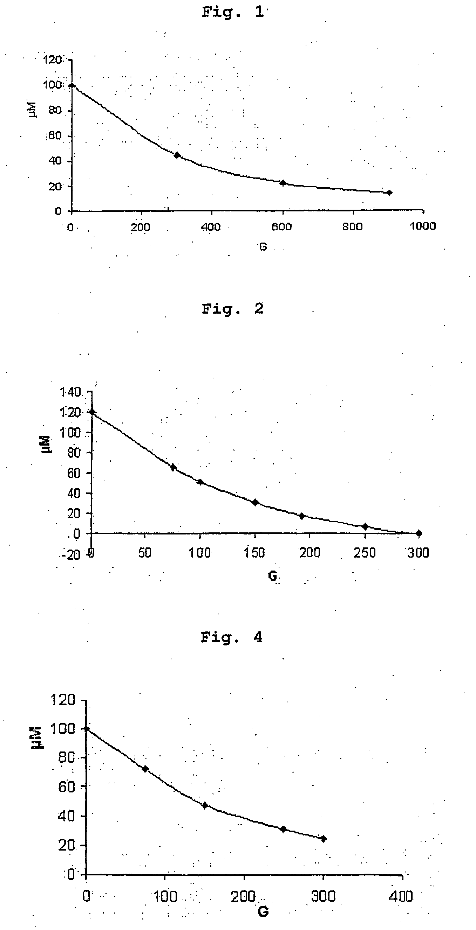

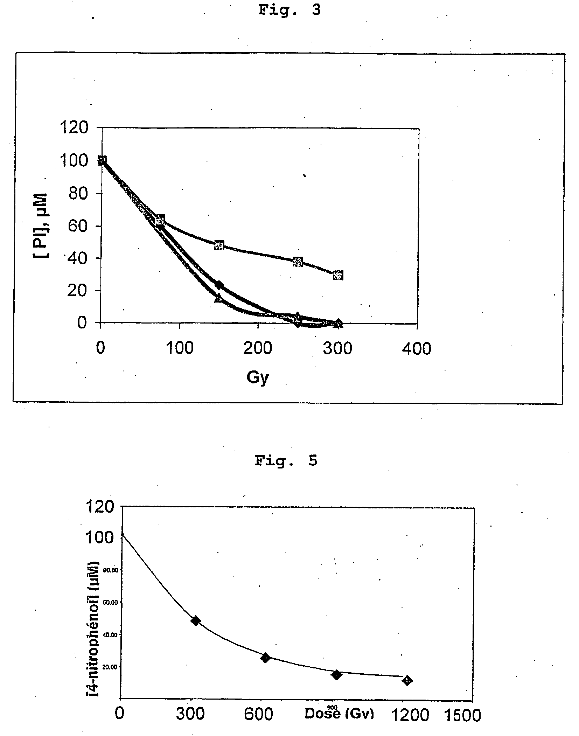

Les figures 4 et 5 représentent l'évolution du taux de nitrophénol en solution aqueuse (en ordonnée, en µM), en fonction de la dose d'irradiation (en Gy, en abscisse) respectivement pour l'ex. 10 et pour l'exemple comparatif 10c.

Les résultats sont donnés dans le tableau II.

**Tableau II**

| Ex. | sulfate de fer II | persulfate de Na | Taux résiduel de molécule organique | Dose d'irradiation (Gy) |
|---|---|---|---|---|
| 10 | 200 µM | 1000 µM | 25% | 300 |
| | | | 47% | 150 |
| 10c | - | - | 20% | 900 |
| | | | 50% | 300 |

### Exemple 3 comparatif

Des essais ont été effectués sur une solution aqueuse de phénol à 400 µM/L, dans les conditions décrites dans l'exemple 1.

La solution a été soumise à différentes doses d'irradiation en faisant varier le temps de séjour sous le faisceau d'électrons, et on a modifié la nature du catalyseur et/ou la teneur en catalyseur. Chaque échantillon a ensuite été analysé par HPLC afin de déterminer la variation de concentration du polluant.

Les résultats sont donnés dans le tableau III.

**Tableau III**

| | Fer II ou III | persulfate de Na | Taux résiduel de phénol | Dose d'irradiation (Gy) |
|---|---|---|---|---|
| | - | - | 51% | 900 |
| | | | 81% | 300 |
| | - | 1000 µM | 77% | 250 |
| | | | 83% | 150 |

La comparaison de 11c et de 11 confirme que l'addition de persulfate de sodium permet de diminuer la dose d'irradiation tout en obtenant un taux résiduel analogue, voire plus faible.

### Exemple 4

Des essais ont été effectués sur trois solutions aqueuses d'acide carboxylique (200 µM/L), dans les conditions de l'exemple 1.

Les résultats sont donnés dans le tableau IV. Les essais 12c, 13c et 14c, sans catalyseur, sont donnés à titre comparatif. Les essais 12, 13 et 14 montrent que l'addition du catalyseur selon l'invention permet de réduire le taux résiduel à dose d'irradiation égale. Pour les essais 12 et 12c effectués sur la solution d'acide formique, le taux résiduel de polluant représente le taux résiduel du COT.

**Tableau IV**

| Ex. | Polluant (100 µM) | perchlorate de fer III | persulfate de Na | Taux résiduel de polluant % | Dose d'irradiation (Gy) |
|---|---|---|---|---|---|
| 12c | Acide formique | 0 | 0 | 84 | 150 |
| | | | | 91 | 75 |
| 12 | Acide formique | 200 µM | 1000 µM | 69 | 150 |
| | | | | 80 | 75 |
| 13c | Acide glycolique | 0 | 0 | 89 | 150 |
| 13 | Acide glycolique | 200 µM | 1000 µM | 43 | 150 |
| 14c | Acide fumarique | 0 | 0 | 30,5 | 600 |
| | | | | 61 | 300 |
| | | | | 79,3 | 150 |
| 14 | Acide fumarique | 200 µM | 1000 µM | 18,2 | 600 |
| | | | | 39,8 | 300 |
| | | | | 57,3 | 150 |

### Exemple 5

Des essais ont été effectués sur une eau de lagune ayant une DCO de 160 mg O₂/L.

L'effluent a été soumis une première fois à une dose d'irradiation de 3375 Gy. Ce traitement a conduit à une DCO résiduelle de 115 mg O₂/L. Puis la solution ainsi obtenue a été soumise à une seconde dose d'irradiation à 3375 Gy dans les différentes conditions mentionnées ci-après :
Essai 15 : Solution sans catalyseur (essai comparatif)
Essai 16 : Solution additionnée de 1000 µM de persulfate de Na (essai comparatif)
Essai 17 : Solution additionnée de 1000 µM de persulfate de Na et 600 µM de chlorure de Fe(III).

Le tableau V présente le taux résiduel de DCO par rapport à la DCO de l'effluent initial (DCO = 160 mg O₂/L) pour les différents essais.

**Tableau V**

| Ex. | Sel de Fer III | Persulfate de Na | Taux résiduel de DCO (%) | Dose d'irradiation (Gy) lors du 2^{ème} traitement |
|---|---|---|---|---|
| 15 | - | - | 71 % | 3375 |
| 16 | - | 1000 *µ*M | 58 % | 3375 |
| 17 | 600 *µ*M | 1000 *µ*M | 31 % | 3375 |

Les résultats obtenus montrent une amélioration des performances en présence de catalyseur. La comparaison des essais 16 et 17 montre que l'addition du sel de Fer(III) à une eau contenant du persulfate de Na permet de diminuer le taux résiduel de DCO.

### Exemple 6

Des essais ont été effectués sur une eau résiduaire ayant un COT (carbone organique total) de 80 mg C/L, issue d'une industrie chimique.

L'effluent a été soumis une première fois à une dose d'irradiation de 13000 Gy. Ce traitement a conduit à un COT résiduel de 66 mg C/L. Puis la solution ainsi obtenue a été soumise à une seconde dose d'irradiation à 7000 Gy dans les différentes conditions mentionnées ci-après :
Essai 18 : Solution sans catalyseur
Essai 19 : Solution additionnée de 1000 µM de persulfate de Na et 600 µM de chlorure de Fe(III).

Le tableau VI présente le taux résiduel de COT par rapport au COT de l'effluent initial (COT = 80 mg C/L).

**Tableau VI**

| Ex. | Sel de Fer III | Persulfate de Na | Taux résiduel de COT (%) | Dose d'irradiation (Gy) lors du 2^{ème} traitement |
|---|---|---|---|---|
| 18 | - | - | 72 % | 7000 |
| 19 | 600 *µ*M | 1000 *µ*M | 42 % | 7000 |

Les résultats obtenus montrent que l'addition du catalyseur selon l'invention permet d'améliorer les performances vis-à-vis du taux résiduel de COT dans le cas d'un effluent d'origine industrielle.

## Revendications

1. Procédé pour diminuer la DCO (demande chimique en oxygène) et/ou le COT (carbone organique total) d'un milieu aqueux contenant des molécules organiques, **caractérisé en ce qu'**il consiste à soumettre ledit milieu aqueux à un faisceau d'électrons généré par un accélérateur d'électrons, en présence d'un catalyseur, puis à éliminer de la solution traitée les précipités formés, ledit catalyseur comprenant un persulfate de métal alcalin, de métal alcalino-terreux ou de métal de transition et un sel de fer choisi parmi le perchlorate de fer et le sulfate de fer.

2. Procédé selon la revendication 1, **caractérisé en ce que** le persulfate est un persulfate de métal alcalin.

3. Procédé selon la revendication 1, **caractérisé en ce que** la concentration en sel de fer est inférieure à la concentration en persulfate.

4. Procédé selon la revendication 1, **caractérisé en ce que** le milieu à traiter a un pH acide.

5. Procédé selon la revendication 1, **caractérisé en ce qu'**il est mis en oeuvre pour le traitement de milieux aqueux contenant des molécules organiques du type aromatique et/ou des molécules organiques du type aliphatique.

## Patentansprüche

1. Verfahren zur Verringerung des CSB (chemischer Sauerstoffbedarf) und/oder des TOC (gesamter organischer Kohlenstoff) eines wässrigen Mediums, das organische Moleküle enthält, **dadurch gekennzeichnet, dass** es darin besteht, das wässrige Medium einem von einem Elektronenbeschleuniger erzeugten Elektronenstrahl auszusetzen, in Gegenwart eines Katalysators, und dann das gebildete Präzipitat aus der behandelten Lösung zu entfernen, wobei der Katalysator ein Persulfat eines alkalischen Metalls, eines erdalkalischen Metalls oder eines Übergangsmetalls und ein Eisensalz umfasst, das aus dem Eisenperchlorat und dem Eisensulfat ausgewählt ist.

2. Verfahren nach Anspruch 1, **dadurch gekennzeichnet, dass** das Persulfat ein Persulfat eines alkalischen Metalls ist.

3. Verfahren nach Anspruch 1, **dadurch gekennzeichnet, dass** die Eisensalzkonzentration unter der Persulfatkonzentration ist.

4. Verfahren nach Anspruch 1, **dadurch gekennzeichnet, dass** das zu behandelnde Medium einen sauren pH hat.

5. Verfahren nach Anspruch 1, **dadurch gekennzeichnet, dass** es für die Behandlung von wässrigen Medien umgesetzt wird, die organische Moleküle vom aromatischen Typ und/oder organische Moleküle vom aliphatischen Typ enthalten.

## Claims

1. A process for reducing the COD (chemical oxygen demand) and/or the TOC (total organic carbon) of an aqueous medium comprising organic molecules, **characterized in that** it consists in subjecting said aqueous medium to an electron beam generated by an electron accelerator in the presence of a catalyst and in then removing the precipitates formed from the treated solution, said catalyst comprising an alkali metal, alkaline earth metal or transition metal persulfate and an iron salt chosen from iron perchlorate and iron sulfate.

2. The process as claimed in claim 1, **characterized in that** the persulfate is an alkali metal persulfate.

3. The process as claimed in claim 1, **characterized in that** the concentration of iron salt is lower than the concentration of persulfate.

4. The process as claimed in claim 1, **characterized in that** the medium to be treated has an acidic pH.

5. The process as claimed in claim 1, **characterized in that** it is used for the treatment of aqueous media comprising organic molecules of the aromatic type and/or organic molecules of the aliphatic type.
